Europäisches Patentamt

European Patent Office

Office européen des brevets

(11) Numéro de publication: **0 259 231 B1**

# FASCICULE DE BREVET EUROPEEN

(45) Date de publication de fascicule du brevet: **04.03.92** (51) Int. Cl.⁵: **G06F 15/332**

(21) Numéro de dépôt: **87401968.0**

(22) Date de dépôt: **02.09.87**

(54) Dispositif de détermination de la transformée numérique d'un signal.

(30) Priorité: **04.09.86 FR 8612431**

(43) Date de publication de la demande:
**09.03.88 Bulletin 88/10**

(45) Mention de la délivrance du brevet:
**04.03.92 Bulletin 92/10**

(84) Etats contractants désignés:
**DE GB NL**

(56) Documents cités:

**IEEE TRANSACTIONS ON COMPUTERS, vol. 19, no. 9, septembre 1972, pages 1026-1027, New York, US; V.J. REJCHRT: "Signal flow graph and a fortran program for Haar-Fourier transform"**

**IEEE TRANSACTIONS ON COMPUTERS, vol. C-32, no. 12, décembre 1983, pages 1128-1136, IEEE, New York, US; P. CHOW et al.: "A pipelined distributed arithmetic PFFT processor"**

(73) Titulaire: **Duhamel, Pierre**
**97, avenue de Verdun**
**F-92130 Issy les Moulineaux(FR)**

(72) Inventeur: **Duhamel, Pierre**
**97, avenue de Verdun**
**F-92130 Issy les Moulineaux(FR)**

(74) Mandataire: **Fort, Jacques et al**
**CABINET PLASSERAUD 84, rue d'Amsterdam**
**F-75009 Paris(FR)**

**Description**

L'invention a pour objet un dispositif de détermination de la transformée numérique d'un signal, susceptible d'être réalisé à partir de circuits de calcul câblés et de mémoires.

Il existe de nombreux domaines techniques dans lesquels il est nécessaire de calculer en temps réel la transformée d'un signal. On connaît des dispositifs de calcul rapide permettant de répondre à ce besoin lorsque les transformées sont de faible longueur. Il n'en est plus de même lorsque les transformées à calculer sont de grande longueur, car la complexité des calculs à effectuer lorsqu'on met en oeuvre les approches traditionnelles est incompatible avec leur exécution en temps réel par le matériel existant.

A titre d'exemple des besoins qui se font sentir, on peut par exemple citer le domaine du radar où il serait souhaitable de déterminer des transformées de Fourier de longueur 128 sur des signaux en codage MIC numérisés sur huit bits. Un autre exemple est celui du traitement d'images, notamment pour le videotexte, où on souhaite disposer de transformées en cosinus de longueur 8 ou 16.

Plus précisément, on connaît de nombreux dispositifs de calcul de transformée numérique d'un signal.

L'article de P. Chow et al "A pipelined distributed arithmetic PFFT processor", IEEE Transactions on Computers, vol. C-32, n° 12, pp. 1128-1136 (document D1) décrit un dispositif ayant un bloc de calcul en arithmétique distribuée f constitué tout entier d'additionneurs et de multiplieurs discrets ou d'une table (mémoire morte adressable) qui stocke des sommes partielles pré-calculées. Il ne s'écarte pas de la pratique habituelle, qui consiste à effectuer des calculs homogènes afin d'utiliser des blocs ayant des cellules répétitives, généralement en éléments discrets et reflète l'attitude habituelle de l'homme de métier, qui consiste à éviter de mélanger, dans un même ensemble, de l'arithmétique distribuée, implémentable notamment sous forme de tables en mémoire morte, et de l'arithmétique série, qui implique une cascade d'additionneurs et de multiplieurs.

L'article de V.J. Rejchrt "Signal flow graph and a fortran program for Haar-Fourier transform", IEEE Transactions on Computers, vol. 19, n° 9, pp. 1026-1027 (document D2) décrit un organigramme de calcul, manifestement destiné à être implémenté par programmation.

Ni l'un ni l'autre de ces documents cités ne suggère qu'une solution présentant un intérêt lorsqu'elle est implémentée par logiciel serait transposable dans un dispositif matériel. Ni l'un ni l'autre ne fait apparaître qu'il peut y avoir avantage à remplacer la structure homogène et habituelle du document D1 par une structure matérielle associant des circuits d'arithmétique distribuée (coûteux lorsque la taille des fonctions à calculer est importante) à des circuits d'arithmétique série, qu'il y a intérêt à garder simples.

L'invention vise à fournir un dispositif suffisamment rapide pour répondre aux besoins de dispositifs de calcul.

Pour atteindre ce résultat, il a tout d'abord été nécessaire de constater que la plupart des transformées intéressantes, et notamment la transformée de Fourier discrète (ou TFD) et la transformée en cosinus discrète (ou TCD) sont d'un type tel que, par une combinaison des échantillons qui représentent le signal à traiter, on puisse obtenir deux transformées de longueur moitié, dont l'une est encore réductible en deux transformées de longueur moitié, et ainsi de suite.

En conséquence, l'invention propose notamment un dispositif de détermination d'une telle transformée discrète conforme à la revendication 1.

Un rappel des principes de l'arithmétique série peut être trouvé dans le document D1 et leur application au calcul de produits de polynomes est décrit dans le document US-A-3 777 130. En arithmétique distribuée, les N mots de données d'entrée à B bits sont considérés un bit à la fois, en commençant par celui de poids minimum, et utilisés en tant qu'opérandes d'une fonction binaire pour calculer un mot de sortie de B bits, avant décalage et calcul du mot de sortie suivant.

Selon la longueur de la transformée, il peut être plus avantageux soit de calculer de façon classique l'autre moitié des échantillons, soit au contraire de répéter l'opération de réduction à deux transformées de longueur moitié, dont l'une est déterminée directement par adressage d'une mémoire, et dont l'autre est traitée par des moyens de calcul.

On voit que l'on peut regarder le dispositif comme comportant un ensemble de circuits élémentaires effectuant un pré-calcul en arithmétique série, puis un circuit de calcul de la moitié des échantillons (et éventuellement de la moitié des échantillons restants, et ainsi de suite) en arithmétique distribuée par appel à une mémoire morte.

Toujours dans le cas de transformée de grande longueur, il peut être avantageux de coder les échantillons sous une forme telle que la mémoire morte utilisée en arithmétique distribuée soit constituée de plusieurs champs identiques les uns aux autres. Grâce à cette disposition, il est possible de réduire la mémoire à l'un des champs identiques, à condition d'accepter un allongement de la durée du calcul.

L'invention sera mieux comprise à la lecture de la description qui suit de modes particuliers d'exécution de l'invention, donnés à titre d'exemples non limitatifs. La description se réfère aux dessins qui l'accompagnent, dans lesquels :

- la figure 1 est un schéma de principe d'un dispositif de calcul de polynômes modulo

$$(z^{2^n} + 1)$$

en arithmétique distribuée ;

- la figure 2, similaire à la figure 1, montre une simplification que permet d'obtenir le codage interne modifié ;
- la figure 3 est un schéma de principe d'un dispositif de calcul d'une TCD de longueur 8 suivant l'invention ;
- la figure 4 est un synoptique correspondant au schéma de la figure 3 ;
- la figure 5, similaire à la figure 4, est un synoptique d'un dispositif de calcul d'une TCD de longueur 16.

Produit de polynômes en arithmétique distribuée.

Avant de décrire l'invention, il est nécessaire de rappeler un certain nombre d'indications sur le calcul des produits de polynômes par arithmétique distribuée. On pourra également se reporter à des documents qui le décrivent, par exemple, au document US-A-3 777 130 qui concerne son application au filtrage numérique.

Bien que les techniques qui seront décrites à ce sujet soient applicables à tout produit interne du type :

$$y = \sum_{k=0}^{N-1} h_k \cdot x_k$$

on se limitera dans ce qui suit au calcul de produits de polynômes modulo

$$(z^{2^n} + 1)$$

par arithmétique distribuée.

Le produit peut s'écrire sous la forme :

$$(1) \quad Y(z) = H(z) \, X(z) \bmod (z^{2^n} + 1)$$

où

$$
\begin{cases}
Y(z) = \displaystyle\sum_{i=0}^{2^n-1} y_i \cdot z^i \\[2em]
H(z) = \displaystyle\sum_{i=0}^{2^n-1} h_i \cdot z^i \\[2em]
X(z) = \displaystyle\sum_{i=0}^{2^n-1} x_i \cdot z^i
\end{cases}
$$

La transformation de l'équation (1) donne, en notation matricielle (2) :

(2)

$$
\begin{bmatrix} y_0 \\ y_1 \\ \vdots \\ y_i \\ \vdots \\ y_{2^n-1} \end{bmatrix}
=
\begin{bmatrix}
h_0 & -h_{2^n-1} & -h_{2^n-2} & \cdots\cdots\cdots & -h_1 \\
h_1 & h_0 & -h_{2^n-1} & & -h_2 \\
 & & & & \\
h_i & & & & \\
 & & & & -h_{2^n-1} \\
h_{2^n-2} & & & & \\
h_{2^n-1} & h_{2^n-2} & \cdots\cdots & h_i \cdots h_1 & h_0
\end{bmatrix}
\begin{bmatrix} x_0 \\ x_1 \\ \\ \\ \\ x_{2^n-1} \end{bmatrix}
$$

Chaque coefficient $y_\ell$ est donc de la forme:

$$(3) \quad Y_\ell = \sum_{i=0}^{2^n-1} a_{\ell i} \cdot x_i$$

Chaque coefficient peut donc être calculé en arithmétique distribuée.

Les nombres $x_i$ sont représentés chacun par un nombre binaire constitué de bits $x_{ij}$, avec $j = 0,..., B-1$. On considérera maintenant deux possibilités de représentation :

1. Représentation de $x_i$ en complément à deux :

Dans ce cas, on a :

$$(4) \quad x_i = -x_{i0} + \sum_{j=1}^{B-1} x_{ij} \cdot 2^{-j}$$

On arrive dans ce cas à la représentation suivante de $y_\ell$ :

$$(5) \quad Y_\ell = - \sum_{i=0}^{2^n-1} a_{\ell i} \, x_{i0} + \sum_{j=1}^{B-1} \left( \sum_{i=0}^{2^n-1} a_{\ell i} \cdot x_{ij} \right) 2^{-j}$$

Dans cette équation (5), la double sommation est calculée par une succession de décalages et d'additions de termes élémentaires, constitués par l'expression entre parenthèses. Chaque terme est constitué par le produit direct du vecteur $a_\ell$ par plusieurs bits successifs $x_{ij}$, avec $i = 0,..., 2^n-1$. On peut désigner par $f_\ell$ la famille de fonctions correspondant chacune à l'expression entre parenthèses :

$$(6) \quad f_\ell (u_0, u_1, ..., u_{2^n-1}) = \sum_{i=0}^{2^n-1} a_{\ell i} \cdot u_i$$

$$\text{avec} \quad \ell = 0, ..., 2^n-1$$

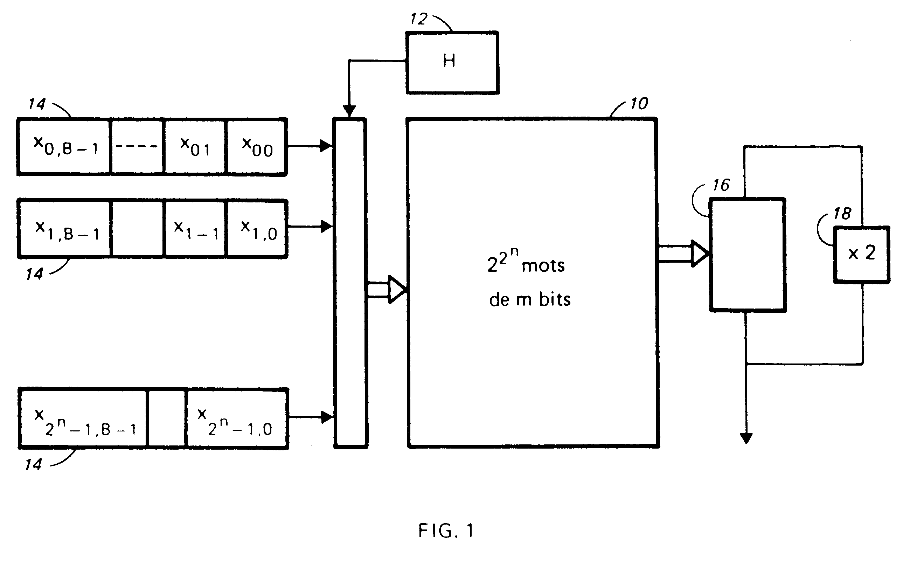

Chaque variable $u_i$ étant un bit, elle ne peut prendre que deux valeurs différentes, de sorte que chaque fonction $f_\ell$ peut prendre

$$2^{2^n}$$

valeurs différentes. Toutes ces valeurs peuvent être stockées dans une mémoire morte de

$$2^{2^n}$$

mots de m bits chacun pour une fonction nécessitant une dynamique de m bits. Le calcul de chaque valeur de $y_\ell$ peut s'effectuer alors avec le montage de constitution simple illustré en Figure 1, exigeant cependant une mémoire morte de capacité égale à

$$2^{2^n}$$

mots pour chaque $y_i$, ce qui peut atteindre un volume très élevé.

Sur la Figure 1, la mémoire morte 10 est montée pour recevoir, à chaque coup d'une horloge 12, une adresse constituée par la valeur des variables $u_i$. Ces variables prendront successivement les valeurs $x_{ij}$ correspondant successivement à $i = 0,..., 2^n-1$ pour toutes les valeurs de $j$ de 0 à B-1, en provenance de registres 14. La sortie de la mémoire 10 est appliquée à l'une des entrées d'un accumulateur constituant additionneur-soustracteur 16. L'autre entrée reçoit la sortie d'un multiplieur par deux 18 (circuit de décalage de la virgule) auquel est appliquée la sortie de l'additionneur-soustracteur. Ce dernier effectue une addition ou une soustraction du contenu de la mémoire morte 10 à la position correspondant à la configuration binaire d'entrée, fournie par les registres 14, conformément à l'équation (5).

On voit qu'après B coups d'horloge, le contenu de l'accumulateur de sortie est égal à $y_\ell$.

Le calcul complet du produit de polynômes nécessite une installation comportant, en parallèle, $2^n$ ensembles du genre montré en figure 1, comprenant chacun une mémoire morte 10 et un additionneur-soustracteur 16. Tous ces ensembles reçoivent les adresses constituées par les bits de même poids des mots d'entrée.

Etant donné que les adresses sont les mêmes pour toutes les fonctions, les mémoires 10 des $2^n$ différents ensembles peuvent être regroupées.

A titre d'exemple, pour n = 3, B = 8 et m = 14, (c'est-à-dire dans le cas où la fonction doit être quantifiée sur quatorze bits), on a besoin de huit mémoires mortes de chacune 256 mots de quatorze bits. Il faut également disposer de huit additionneurs-soustracteurs de chacun seize bits. Le résultat est obtenu en huit coups d'horloge.

2. Représentation de $x_i$ en "code interne modifié" ou CIM

La mémoire morte 10 correspondant à la fonction $f_\ell$, telle que définie par l'équation (6), présente une certaine redondance, certains éléments résultant d'autres par multiplication par un nombre affecté d'un signe. Si on souhaite réduire la taille de la mémoire 10 nécessaire au calcul de $f\ell$, au prix d'une arithmétique un peu plus complexe, il suffit de faire apparaître la redondance en représentant les nombres $x_i$, non plus en complément à deux, mais en utilisant un "code interne modifié", ou CIM, qui sera maintenant défini.

Si on désigne par $x'_{ij}$, avec $j = 1,..., \ell$, la représentation d'un nombre $x_i$ en CIM, la contrepartie de l'équation (4) qui fournissait la représentation de $x_i$ en complément à deux, est :

$$(7) \quad x_i = \sum_{j=0}^{B-1} 2^{-j-1} (x'_{ij} - \overline{x'_{ij}}) + 2^{-B} (\overline{x'_{iB}} - \overline{x'_{iB}})$$

avec :

$$(8) \quad \begin{cases} x'_{i0} = \overline{x_{i0}} = 1 - x_{i0} \\[2mm] x'_{ij} = x_{ij} \quad \text{où} \quad 1 \leqslant j \leqslant B-1 \\[2mm] x'_{iB} = 0 \end{cases}$$

En reportant la représentation de $x_i$ en CIM dans l'équation (3), on obtient :

$$(9) \quad Y_\ell = \sum_{i=0}^{2^n-1} a_{\ell i} \left[ \sum_{j=0}^{B-1} 2^{-j-1} (x'_{ij} - \overline{x'_{ij}}) - 2^{-B} \right]$$

$$= \sum_{j=0}^{B-1} \left[ \sum_{i=0}^{2^n-1} a_{\ell i} (x'_{ij} - \overline{x'_{ij}}) \right] 2^{-j-i} - \sum_{i=0}^{2^n-1} a_{\ell i} 2^{-B}$$

Cette équation peut être mise sous une forme permettant de réduire le nombre de paramètres dont dépend la fonction $f_\ell$ si on pose $\epsilon_{ij} = x'_{ij} - \overline{x'_{ij}}$, $\epsilon_{ij}$ étant toujours égal soit à +1, soit à -1. La fonction $f_\ell$ à stocker en mémoire peut alors s'écrire :

$$(10) \quad f_\ell (\epsilon_{0j}, \epsilon_{ij}, \ldots, \epsilon_{2^n-1\ j}) = \sum_{i=0}^{2^n-1} a_{\ell i} \epsilon_{ij}$$

Etant donné que $\epsilon_{ij}$ vaut +1 ou -1, on peut mettre $\epsilon_{0j}$ en facteur (un résultat comparable serait obtenu avec un autre facteur $\epsilon$), et on a alors :

$$(11)$$
$$f_\ell (\epsilon_{0j}, \epsilon_{ij}, \ldots, \epsilon_{2^n-1\ j}) = \epsilon_{0j} \left[ a_{\ell 0} + \sum_{i=1}^{2^n-1} a_{\ell i} \epsilon_{ij} \epsilon_{0j} \right]$$

Pour simplifier la notation, on peut écrire :

$$\epsilon_{ij} \cdot \epsilon_{0j} = n_{ij'}$$

et on a alors :

$$(12) \quad f'_\ell (n_{ij}, \ldots, n_{2^n-1'j}) = a_{\ell 0} + \sum_{i=1}^{2^n-1} a_{\ell i} \cdot n_{ij}$$

On constate que la fonction $f'_\ell$ ne dépend plus que de $2^n$-1 paramètres et ne prend plus que

$$2^{2^n-1}$$

valeurs différentes. La taille de la mémoire nécessaire est divisée par deux par rapport au cas du codage en complément à deux. Il s'agit là d'un avantage qui sera important si la mémoire est volumineuse. Dans le cas de mémoires de capacité limitée, la réduction de volume de mémoire ne justifiera pas l'allongement de la durée du calcul et la complexité accrue des opérations arithmétiques, bien que l'accroissement de complexité soit faible; en effet, les changements à apporter au schéma de principe montré en Figure 1 sont réduits. Il suffit :
- d'une porte OU EXCLUSIF (ou XOR) entre $\epsilon_{0j}$ et $\epsilon_{ij}$ pour passer des variables $\epsilon_{ij}$ aux variables $n_{ij'}$ si on suppose que l'état logique 0 correspond à $\epsilon_{ij} = -1$ et l'état logique 1 à $\epsilon_{ij} = 1$ ;

- d'un circuit de changement de signe du mot qui sort de la mémoire morte si $\epsilon_{0j}$ est égal à 0, la valeur à additionner dans l'accumulateur étant le résultat d'une opération OU EXCLUSIF entre $\epsilon_{0j}$ et les bits qui sortent de la mémoire.

Le terme supplémentaire

$$\sum_{i=0}^{2^n-1} a_{\ell i} \cdot 2^{-B}$$

étant fixe, sa présence n'exige pas de temps de cycle supplémentaire : il suffit de l'utiliser pour initialiser l'accumulateur.

Dans le cas du calcul d'un produit de polynômes, les fonctions $f_\ell$ et $f_{\ell+1}$ définies par l'équation (10) ne sont pas indépendantes.

En effet,

$$f_{\ell+1}(\epsilon_{0j}, \epsilon_{1j},...,\epsilon_{2^n-1,j}) = f_\ell(\epsilon_{1j},\epsilon_{2j},..,\epsilon_{2^n-1j},-\epsilon_{0j})$$

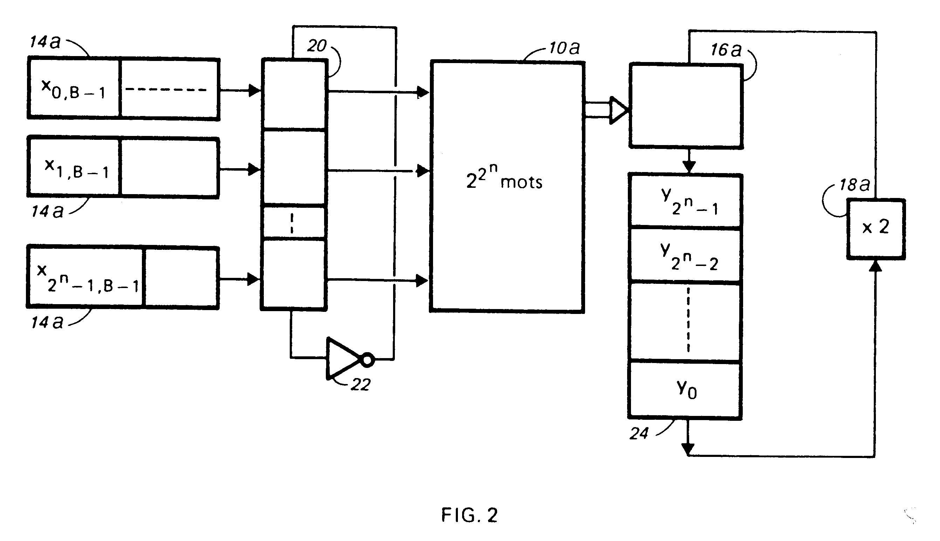

Cette constatation permet de diminuer la mémoire nécessaire pour le calcul d'un produit de polynômes en utilisant l'arithmétique distribuée et le code CIM. En effet, $-\epsilon_{0j}$ est représentable en CIM à l'aide d'un bit, constitué par l'inversion du symbole logique correspondant à $\epsilon_{0j}$. L'ensemble du produit de polynômes $y_\ell$, avec $\ell = 0,..., 2^n-1$ peut donc être calculé à l'aide d'un circuit du type montré en Figure 2. Sur ce circuit, les éléments déjà représentés en Figure 1 sont désignés par le même numéro de référence affecté de l'indice a. On supposera encore que $e_i = -1$ est représenté par l'état logique 0 tandis que $e_i = +1$ est représenté par l'état logique 1.

Tous les $2^n$ coups d'horloge, les registres 14a chargent un bit de chaque mot $x_i$ dans le registre 20. Ce registre 20 a pour fonction d'adresser la mémoire morte 10a de

$$2^{2^n}$$

mots de m bits. Cette mémoire 10a peut être la même que l'une des mémoires 10 de la figure 1. A chaque coup d'horloge, le registre 20, qui comporte $2^n$ positions de un bit, est décalé. Le bit sortant du registre 20 est réinjecté à l'entrée du registre, après inversion dans un inverseur 22. A chaque coup d'horloge, la mémoire morte 10a fournit en sortie :

$f_0(\epsilon_0, \epsilon_1, .., \epsilon_{2n-1})$, puis

$f_1(\epsilon_0, ..., \epsilon_{2n-1})$, puis $f_2$, ... etc.

Les valeurs $f_0$, $f_1$, etc sont accumulées, chaque fois avec les valeurs correspondant à la contribution des bits précédents des mots d'entrée, au calcul de l'échantillon de sortie concerné. Pour cela, la sortie de la mémoire est encore reliée à un additionneur 16a formant accumulateur. Mais ce dernier, au lieu d'être rebouclé directement par le circuit multiplieur 18a, attaque un registre à décalage 24 comportant 2n positions de chacune m + n bits (ou moins, si 'on profite du décalage pour effectuer une troncature).

Après B. $2^n$ coups d'horloge, le registre à décalage 24 contiendra les échantillons

$$y0, ..., y_{2^n-1}.$$

On voit que dans ce cas le polynôme complet est calculé en B. $2^n$ coups d'horloge, alors qu'il suffisait de B coups d'horloge dans le cas de la figure 1. Mais, par contre, il suffit d'une seule mémoire 10a au lieu de $2^n$ mémoires.

Toutes les solutions intermédiaires sont évidemment possibles, suivant la vitesse recherchée. Par exemple, en utilisant deux mémoires mortes de chacune

$$2^{2^n}$$

mots, le calcul est effectué en B. $2^{n-1}$ coups d'horloge.

Par ailleurs, les schémas des figures 1 et 2 supposent que le calcul s'effectue avec le bit de poids fort en tête dans les registres 14 et 14a. On pourrait tout aussi bien faire intervenir le bit de poids faible en tête, en remplaçant les multiplieurs 18 et 18a par des diviseurs par deux, c'est-à-dire en faisant le décalage en sens opposé.

Cas des T.C.D.

On décrira maintenant, mais uniquement dans le cas particulier de la transformation en cosinus discret ou TCD, des dispositifs permettant de réduire la complexité des calculs et la taille des mémoires requises pour le calcul de toute transformée discrète d'un signal représenté par $N = 2^n$ échantillons numériques, lorsque la transformée est telle que l'on puisse effectuer une décomposition de la transformée en produits de polynômes, puis les calculer en arithmétique distribuée. Le gain sur la complexité sera notamment dû à ce que les pré-calculs nécessaires avant de faire appel à un adressage en mémoire morte sont effectués en arithmétique série.

On a déjà montré, dans la demande de brevet FR EN 86 01629 du demandeur, que la transformée en cosinus discret, dont la notation habituelle est :

$$(13) \quad X_k = \sum_{i=0}^{N-1} x_i . \cos\left[(2\Pi/4N)(2i+1)k\right]$$

$$\text{avec } k = 0, \ldots, N-1$$

peut se mettre sous la forme :

$$X_k = \sum_{i=0}^{N-1} x_i . \cos\left[(2\Pi/4N) \langle 5^i \rangle_{4N} \ k\right]$$

La simplification apportée par l'invention part de la constatation qu'une TCD, comme d'ailleurs d'autres transformations discrètes d'un signal représenté par $2^n$ échantillons, présente les propriétés que :

les termes impairs $X_{2k+1}$ s obtiennent, à un signe près, par un produit de deux polynômes ayant une longueur $2^n-1$;

les termes pairs $X_{2k}$ peuvent être obtenus en sortie d'une transformée de longueur moitié.

La seconde propriété est bien connue. La première peut être démontrée. Pour cela, on considère la fonction :

$$(14) \quad Y_k = \sum_{i=0}^{N-1} x_i \left[\cos \frac{2\pi}{4N}(2i+1)(2k+1)\right],$$

$$\text{avec } k = 0, \ldots, N-1$$

qui est la représentation d'un terme impair, d'ordre $2k+1$, de la TCD $X_k$. Elle a la propriété suivante :
- les N/2 premiers termes, $Y_k$, pour $k = 0, \ldots, N-1$, sont égaux aux N/2 premiers termes impairs de la transformée,
- les N/2 termes suivants sont opposés aux N/2 premiers termes, ce qui peut s'écrire :

$$Y_k = X_{2k+1} \quad \text{avec} \quad k=0,\ldots,\ \frac{N}{2} - 1$$

(15)

$$Y'_{N-k+1} = - X_{2k+1}$$

La fonction $Y_k$ donnée en (14) est symétrique en i et k. En conséquence, les mêmes changements de variables que ceux exposés dans la demande FR n° 86 01 629, de x à x', puis à x", s'appliquent pour i et k, ce qui permet d'arriver à une représentation Y'k de Yk qui est :

$$(16) \quad Y'k = \sum_{i=0}^{N-1} x'_i \left[ \cos \frac{2\pi}{4N} (4_i+1)(4k+1) \right]$$

$$\text{avec } Y'_k = Y_{2k} \qquad x'_i = x_{2i}$$
$$Y'_{N-k-1} = Y_{2k+1} \qquad x'_{N-i-1} = x_{2i+1}$$

$$\text{et } \left. \begin{array}{c} i \\ k \end{array} \right\} = 0,\ \ldots,\ \frac{N}{2} - 1$$

puis à une nouvelle représentation $Y''_k$ :

$$(17) \quad Y''_k = \sum_{i=0}^{N-1} x''_i \cdot \cos \frac{2\pi}{4N} \left\langle 5^{i+k} \right\rangle_{4N}$$

$$\text{avec} \left\{ \begin{array}{l} Y''_k = \dfrac{Y'_{\left\langle 5^k \right\rangle_{4N} - 1}}{4} \\[3mm] x''_i = \dfrac{x'_{\left\langle 5^i \right\rangle_{4N} - 1}}{4} \end{array} \right.$$

$$\text{et } \left. \begin{array}{c} i \\ k \end{array} \right\} = 0,\ldots,\ N - 1$$

Le polynôme constitué de tous les termes impairs $Y''_k$ peut s'écrire :

$$(18) \quad Y(z) = \sum_{k=0}^{N-1} Y''_k \cdot z^k$$

ou, à partir de l'équation (17),

$$(19) \quad Y(z) = X(z), W(z) \bmod (z^N - 1)$$

en posant :

$$(20) \begin{cases} X(z) = \sum_{i=0}^{N-1} x_i''. z^i \\ \\ W(z) = \sum_{i=0}^{N-1} \cos \frac{2\pi}{4N} \langle 5^i \rangle_{4N} z^i = \sum_{i=0}^{N-1} w_i z^i \end{cases}$$

Les polynômes $Y(z)$ et $W(z)$ présentent une redondance représentée par l'équation (15). De plus on voit que

$$Y''_{k+N/2} = -Y''_k$$
$$W_{i+N/2} = -W_i$$

Tous les $X_{2k+1}$ sont indépendants entre eux. En conséquence, les valeurs successives prises par $Y''\ell$ avec $\ell = 0,...,\frac{N}{2}-1$, seront égales à toutes les valeurs de $X_{2k+1}$, à un signe près. En effet, il y aura identité pour $k < N/2$. Il y aura changement de signe lorsque les permutations inverses de celles des équations (16) et (17) pour $Y_k''$ avec $k = 0, ...,\frac{N}{2}-1$ donnent $k \geq N/2$.

Si on écrit les équations (18), (19) et (20) modulo $(z^{N/2}+1)$ on obtient :

$$(18bis) \quad Y'(z) = 2 \sum_{k=0}^{N/2-1} Y_k''. z^k$$

$$(19bis) \quad Y'(z) = X'(z). W'(z) \bmod (z^{N/2}+1)$$

$$(20bis) \begin{cases} X'(z) = \sum_{i=0}^{N/2-1} (x''_i - x''_{i+N/2}) z^i \\ \\ W'(z) = 2 \sum_{i=0}^{N/2-1} \cos \frac{2\pi}{4N} \langle 5^i \rangle_N z^i \end{cases}$$

on voit que les termes impairs de la D.C.T. sont tous obtenus par un produit de polynômes modulo $z^{N/2}+1$.

Cette constatation fait apparaître qu'une DCT de longueur $N = 2^n$ peut, au lieu de faire l'objet du calcul direct en arithmétique distribuée de la matrice (2), ce qui exige une mémoire morte de

$$2^{2^n}$$

mots, être calculée en au moins deux étapes :
- une étape de pré-calcul, effectuée à l'aide de "papillons" classiques en matière de calcul de transformées permettant d'obtenir d'une part les éléments de calcul des termes pairs, d'autre part un produit de polynômes représentant les termes impairs.
- une étape de calcul des termes impairs, en arithmétique distribuée, ne nécessitant plus qu'une mémoire adressable de

$$2^{2^{n-1}}$$

mots. Le calcul des termes pairs peut, si la longueur restante $2^{n-1}$ le justifie, s'effectuer par répétition du même processus, et ainsi de suite.

Dans le cas de transformée relativement courte, par exemple de longueur 8, l'accroissement de complexité qu'implique la mise en C.I.M. ne sera pas justifié. On pourra alors utiliser le calcul en complément à deux.

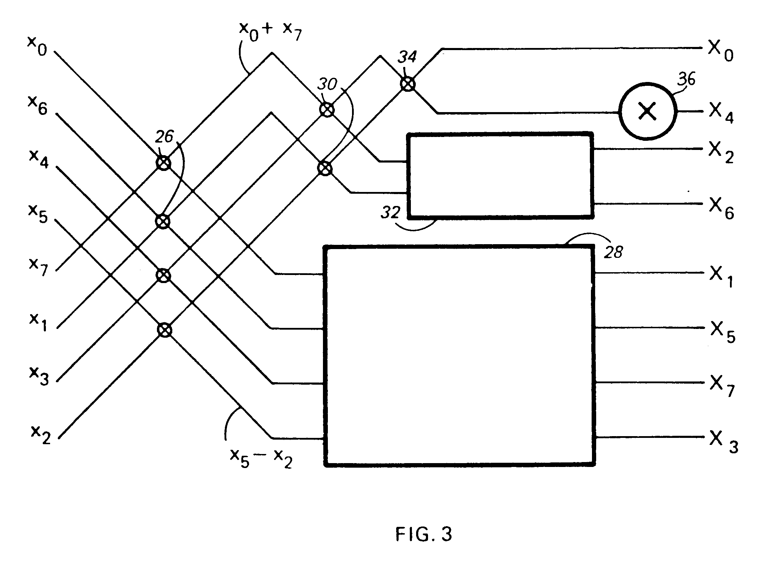

La figure 3 montre la constitution de principe d'un dispositif de calcul d'une TCD de longueur 8, les échantillons étant codés en complément à deux. La partie représentée correspond à un seul des termes y et le dispositif complet comportera donc huit circuits.

Les échantillons $x_0$, ..., $x_7$ sont appliqués à un premier étage d'opérateurs "papillons" 26 fournissant :
la somme des termes d'entrée sur une première sortie,
la différence des termes d'entrée sur une seconde sortie.

Ces opérateurs 26 constituent un circuit de pré-calcul en arithmétique série, c'est-à-dire effectuée bit par bit, sur des mots en parallèle. Les sorties soustractives des papillons sont appliquées à titre d'adresse à une mémoire morte 28 qui va effectuer le calcul de la matrice (2) en arithmétique distribuée, sur une longueur moitié de celle de la transformée complète. Dans le cas particulier de la longueur 8, la mémoire 28 doit effectuer un produit de polynômes de longueur 4 modulo $z^4 + 1$. Cette mémoire 28 devra donc avoir une capacité de 64 mots de m bits, m étant le nombre de bits qu'impose la dynamique recherchée pour la fonction de sortie.

La même séquence de pré-calcul puis de calcul en arithmétique distribuée peut être répétée sur les termes pairs restants. Dans le mode de réalisation montré en figure 3, on trouve une seconde couche 30 d'opérateurs papillons, dont les sorties soustractives attaquent les entrées d'adressage d'une mémoire morte 32 qui va réaliser un produit de polynômes modulo $z^2 + 1$. La mémoire 32 n'aura à contenir que 8 mots de m bits. Enfin le dernier opérateur 34 permet d'obtenir les termes restants.

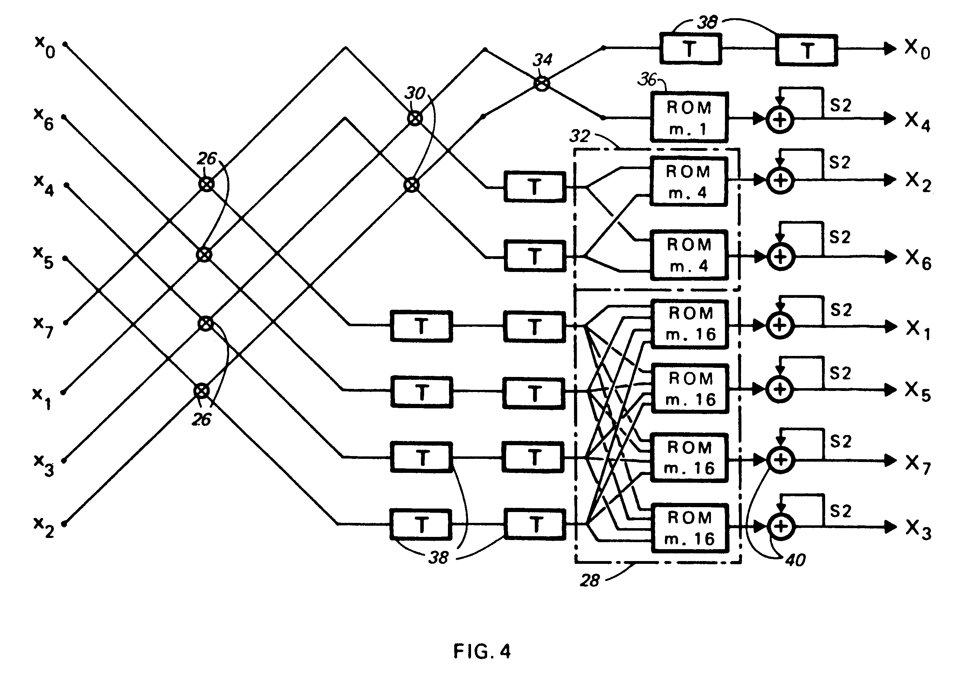

Dans la pratique, le circuit pourra avoir la constitution montrée en figure 4, où on retrouve les mémoires mortes 28 et 32.

Ces mémoires sont fractionnées et toutes les fractions ont la même capacité de mots de m bits : par exemple, la mémoire 28 peut être constituée de quatre fractions de 16 mots, alors que la mémoire 32 est formée de deux fractions de 4 mots et la mémoire 36 de calcul du terme X4 d'un seul mot. Des éléments de retard 38 tous identiques, pouvant être constitués par des registres à décalage à une position binaire munis d'une entrée d'horloge non représentée, sont interposés sur les entrées des mémoires pour fournir chacun un retard d'une période T d'horloge et permettre de pipeliner le système. Enfin, chaque fraction de mémoire, affectée à un terme X particulier, alimente un accumulateur 40 constitué par un circuit additionneur rebouclé sur lui-même, l'ensemble des additionneurs élémentaires constituant un opérateur parallèle.

Au lieu d'utiliser un circuit fonctionnant en complément à deux, on peut préalablement coder les échantillons en CIM à l'aide d'un circuit dont la constitution découle directement de la nature du codage, tel que défini par les formules (7) et (8). Dans ce cas, il est possible :
- de diviser par deux la capacité des mémoires,
- de donner une constitution identique à toutes les fractions de mémoire de même taille (les quatre fractions de la mémoire 28 par exemple) ou d'utiliser une seule fraction par mémoire, en l'utilisant à plusieurs reprises successivement, au prix d'une réduction de la vitesse de calcul.

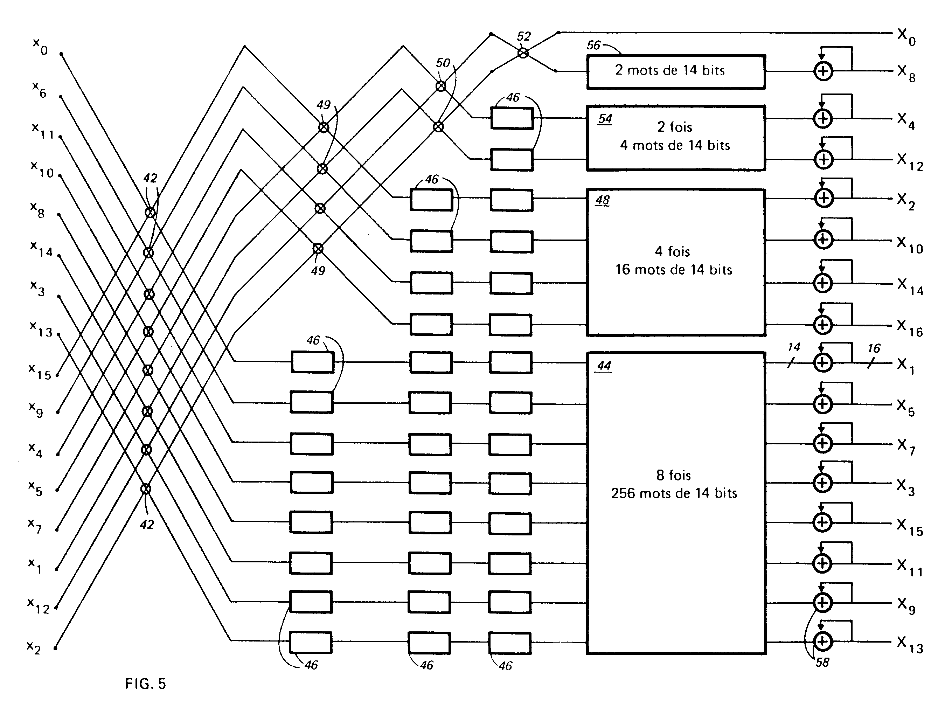

Toujours dans le cas d'un codage en complément à deux, le dispositif de calcul d'une TCD de longueur 16 peut avoir la constitution montrée en figure 5 où on retrouve une première couche de huit opérateurs papillons 42 qui fournissent :
- des termes qui sont calculés en arithmétique distribuée à l'aide d'une mémoire morte 44 à 256 positions et 112 fils de sortie, fournissant les huit termes impairs sur 14 bits, trois éléments de retard 46 étant interposés sur chaque entrée pour assurer la synchronisation des sorties par retard de trois périodes d'horloge (c'est-à-dire, du nombre de périodes requis pour le fonctionnement du canal le plus lent, comportant quatre papillons en cascade).
- des termes qui sont soumis à de nouveaux pré-calculs de mise sous forme d'un produit de polynômes. Pour cela, une seconde couche de papillons 49 combine les termes pour donner naissance à ceux qui vont:

. donner directement naissance à des termes maintenant "impairs"

$X_{2.1}$ , $X_{2.3}$, $X_{2.5}$, $X_{2.7}$

. pouvoir faire l'objet d'au moins un nouveau fractionnement :

$X_0$, $X_{2.2}$, $X_{2.2.2}$, et $X_{2.2.3}$

Les éléments de calcul des termes maintenant considérés comme impairs sont ap liqués par l'intermédiaire d'éléments de retard 46, à une mémoire morte 48 de 16 mots de 4 x 14 bits, munie de 16 x 14 fils de sortie.

Le même processus est suivi après une nouvelle décomposition à l'aide de papillons 50, puis 52,de précalcul, à l'aide de mémoires mortes adressables 54 et 56, tous les fils de sortie des mémoires 44, 48, 54 et 56 attaquant des additionneurs-accumulateurs 58 qui fournissent les termes X de la transformée, par exemple sur 16 bits.

**Revendications**

1. Dispositif de détermination de la transformée discrète d'un signal X représenté par N échantillons numériques binaires $x_{0'}$, ..., $x_i$, ... $x_{N-1'}$ ladite transformée étant d'un type tel que, par une combinaison desdits échantillons qui fournit d'une part la somme, d'autre part la différence des échantillons pris deux à deux, elle soit réductible à deux transformées de longueur moitié dont l'une est encore réductible en deux transformées de longueur moitié, si N est une puissance de 2,

caractérisé en ce que le dispositif comprend : un ensemble de circuits élémentaires (26 ou 42) en arithmétique (bit par bit) fournissant les sommes et différences des échantillons d'entrée deux à deux ; un circuit (28 ou 44) à mémoire morte adressable, relié aux circuits élémentaires (26 ou 42) pour recevoir les différences entre échantillons d'entrée et déterminer directement, en arithmétique distribuée, la moitié des échantillons de la transformée complète ; et des circuits de calcul (30-36 ou 49-56) distincts et différents dudit circuit (28 ou 44) à mémoire morte addressable, reliés aux circuits élémentaires (26 ou 42) pour recevoir les sommes entre échantillons d'éntree, fournissant en arithmétique série l'autre moitié des échantillons de la transformée complète.

2. Dispositif selon la revendication 1,

caractérisé en ce que lesdits circuits de calcul (30-36 ou 49-56) comportent d'autres circuits élémentaires (30 ou 49) en arithmétique série, un circuit (32 ou 48) pour recevoir les différences entre échantillons fournis par lesdits autres circuits élémentaires (26 ou 42) et des moyens (36 ou 50-56) de calcul de la moitié des échantillons restants.

3. Dispositif selon la revendication 1 ou 2,

caractérisé en ce que ledit circuit (28) à mémoire morte adressable comprend $N = 2^n$ ensembles constitués chacun d'une mémoire morte (10) de stockage de $2^{2n}$ valeurs, adressable successivement par chacun des bits successifs des échantillons appliqués à la mémoire et un circuit accumulateur (16) rebouclé par un multiplieur (ou diviseur) par deux (18).

4. Dispositif selon la revendication 1, 2 ou 3,

caractérisé en ce que ledit circuit (28 ou 44) à mémoire morte adressable calcule directement les termes impairs de la transformée par un produit de deux polynômes de longueur $2^{n-1}$, les échantillons d'entrée étant au nombre de $N = 2^n$.

5. Dispositif selon la revendication 4,

caractérisé en ce que les circuits élémentaires sont constitués de papillons (26 ou 42) permettant d'obtenir d'une part les sommes constituant les éléments de calcul des termes pairs, d'autre part les différences constituant les éléments de calcul, par produit de polynômes, des termes impairs de la transformée.

6. Dispositif selon la revendication 4 ou 5,

caractérisé en ce que ledit circuit (28 ou 44) à mémoire morte adressable comporte une mémoire adressable de $2^{n-1}$ mots permettant d'effectuer le calcul des termes impairs en arithmétique distribuée.

7. Dispositif selon la revendication 5,

caractérisé en ce que les circuits de calcul comportent également des papillons (30 ou 49)

13

permettant d'obtenir les sommes constituant les éléments de calcul de la moitié des termes restants et les différences constituant les éléments de calcul du reste des termes restants, par produit de polynômes.

## Claims

1. Device for the determination of the discrete transform of a signal X represented by N binary digital samples $x_0,..., x_i..., x_{N-1}$, said transform being such that, by combining said samples for obtaining on one part the sum and on the other part the difference of couples of samples, it may be converted into two transforms of half-length one of which may again be decomposed into two transforms of half-length, if N/2 is a multiple of 2,
   characterized in that the device comprises: a set of elementary circuits (26 or 42) in (bit per bit) arithmetic delivering the sums and differences of couples of input samples; a circuit (28 or 44) having an addressable read only memory, connected to the elementary circuits (26 or 42) for receiving the differences between input samples and for directly determining, in distributed arithmetic, one half of the samples of the complete transform; and computing means (30-36 or 49-56) which are distinct and different from said circuit (28 or 44) having an addressable read only memory, connected to the elementary circuits (26 or 42) for receiving the sums of input samples, delivering, in series arithmetic, the other half of the samples of the complete transform.

2. Device according to claim 1,
   characterized in that said computing circuits (30-36 or 49-56) comprise additional elementary circuits (30 or 49) in series arithmetic, a circuit (32 or 48) for receiving the differences between samples delivered by said other elementary circuits (26 or 42) and means (36 or 50-56) for computing one half of the remaining samples.

3. Device according to claim 1 or 2,
   characterized in that said circuit (28) having an addressable read only memory comprises $N = 2^n$ units each consisting of a read only memory (10) for storing $2^2$ values, successively addressable by each of the successive bits of the samples applied to the memory and an accumulator circuit (16) looped by a multiplier (or divider) by two (18).

4. Device according to claim 1, 2 or 3,
   characterized in that said circuit (28 or 44) having an addressable read only memory directly computes the odd terms of the transform as a polynomial product of length $2^{n-1}$, the number of the input samples being $N = 2^n$.

5. Device according to claim 4,
   characterized in that the elementary circuits are constituted of butterflies (26 or 42) for obtaining on the one hand the sums which constitute the elements for computation of the even terms, on the other hand the differences constituting the elements for computing, by polynomial product, odd terms of the transform.

6. Device according to claim 4 or 5,
   characterized in that said circuit (28 or 42) having an addressable read only memory comprises an addressable memory of $2^{n-1}$ words for carrying out computation of the odd terms in distributed arithmetic.

7. Device according to claim 5,
   characterized in that the computation circuits further comprise butterflies (30 or 49) for obtaining sums constituting elements for computing half of the remaining terms and the differences which constitute the elements for computing the balance of the remaining terms, by polynomial product.

## Patentansprüche

1. Vorrichtung zur Ermittlung der digitalen Transformation eines durch N binäre digitale Abtastwerte $x_0$, ..., $x_1$, ..., $x_{N-1}$ dargestellten Signals X, wobei die Transformation von einem solchen Typ ist, daß sie durch eine Kombination der Abtastwerte, die einerseits die Summe und andererseits die Differenz jeweils zweier Abtastwerte liefert, auf zwei Transformierte halber Länge reduzierbar ist, von denen wiederum eine in zwei Transformierte halber Länge reduzierbar ist, wenn N eine Potenz von 2 ist, dadurch gekennzeichnet, daß die Vorrichtung eine Gesamtheit von (Abtastwert-für-Abtastwert-)Arithmetik-Grundschaltungen (26 oder 42), die die Summen und Differenzen je zweier Eingangsabtastwerte liefern, eine adressierbare passive Speicherschaltung (28 oder 44), die mit den Grundschaltungen (26 oder 42) verbunden ist, um die Differenzen zwischen Eingangsabtastwerten zu empfangen und die Hälfte der Bits der kompletten Transformierten in verteilter Arithmetik direkt zu bestimmen, und einzelne und von den adressierbaren passiven Speicherschaltungen (28 oder 44) verschiedene Rechenschaltungen (30 bis 36 oder 49-56), die mit den Grundschaltungen (26 oder 42) verbunden sind, um die Summen von Eingangsabtastwerten zu empfangen, und die in serieller Arithmetik die andere Hälfte der Abtastwerte der kompletten Transformierten liefern, aufweist.

2. Vorrichtung nach Anspruch 1, dadurch gekennzeichnet, daß die Rechenschaltungen (30-36 oder 49-56) weitere Grundschaltungen (30 oder 49) in serieller Arithmetik, eine Schaltung (32 oder 48) zum Empfangen der Differenzen zwischen von den anderen Grundschaltungen (26 oder 42) gelieferten Abtastwerten und Mittel (36 oder 50 bis 56) zum Berechnen der Hälfte der verbleibenden Abtastwerte aufweisen.

3. Vorrichtung nach Anspruch 1 oder 2, dadurch gekennzeichnet, daß die adressierbare passive Speicherschaltung (28) N = $2^n$ Einheiten, die jeweils aus einem nacheinander von jedem der an den Speicher angelegten aufeinander folgenden Abtastwerte adressierbaren passiven Speicher (10) zum Speichern von 2 Werten und einer über einen Multiplizierer (oder Dividierer) mit (bzw. durch) zwei (18) gebildet sind, aufweist.

4. Vorrichtung nach Anspruch 1, 2, oder 3, dadurch gekennzeichnet, daß die adressierbare passive Speicherschaltung (28 oder 44) die ungeradzahligen Ausdrücke der Transformierten direkt durch ein Produkt aus zwei Polynomen der Länge $2^{n-1}$ berechnet, wobei die Menge der Eingangsabtastwerte N = $2^n$ beträgt.

5. Vorrichtung nach Anspruch 4, dadurch gekennzeichnet, daß die Grundschaltungen aus Knotenpunkten (26 oder 42) gebildet sind, die ermöglichen, einerseits die die Rechenelemente der geradzahligen Ausdrücke darstellenden Summen und andererseits die die Rechenelemente der ungeradzahligen Ausdrücke der Transformierten darstellenden Differenzen, die aus Polynomen gebildet sind, zu erhalten.

6. Vorrichtung nach Anspruch 4 oder 5, dadurch gekennzeichnet, daß die adressierbare passive Speicherschaltung (28 oder 44) einen adressierbaren Speicher mit $2^{n-1}$ adressierbaren Worten aufweist, der das Berechnen der ungeradzahligen Ausdrücke in verteilter Arithmetik ermöglicht.

7. Vorrichtung nach Anspruch 5, dadurch gekennzeichnet, daß die Rechenschaltungen außerdem Knotenpunkte (30 oder 49) aufweisen, die ermöglichen, die die Rechenelemente der Hälfte der verbleibenden Ausdrücke darstellenden Summen und die die Rechenelemente der verbleibenden Ausdrücke darstellenden Differenzen durch Produkte aus Polynomen zu erhalten.

FIG. 1

EP 0 259 231 B1

FIG. 2

$x_0$

$x_0 + x_7$

$X_0$

$x_6$

34

36

30

$\times$ $X_4$

26

$x_4$

$X_2$

$x_5$

32

$X_6$

$x_7$

28

$x_1$

$X_1$

$x_3$

$X_5$

$x_2$

$X_7$

$x_5 - x_2$

$X_3$

FIG. 3

EP 0 259 231 B1

FIG. 4

FIG. 5

EP 0 259 231 B1